# EUROPEAN PATENT SPECIFICATION

(11) **EP 3 466 630 B1**
(45) Date of publication and mention of the grant of the patent: **13.04.2022**
(21) Application number: 17802540.9
(22) Date of filing: 01.05.2017
(51) Int. Cl.: B29B 9/14, B29B 9/06, B29B 7/42, B29B 7/72, B29B 7/90, B29C 48/00, B29C 48/04, B29C 48/05, B29C 48/285, B29C 45/00, C08J 5/04

(54) **METHOD FOR PRODUCING A FIBER-CONTAINING PARTICULATE RESIN STRUCTURE**
VERFAHREN ZUR HERSTELLUNG EINER FASERHALTIGEN TEILCHENFÖRMIGEN HARZSTRUKTUR
PROCÉDÉ DE PRODUCTION D'UNE STRUCTURE DE RÉSINE PARTICULAIRE CONTENANT DES FIBRES

(30) Priority: 24.05.2016 JP 2016103407
(43) Date of publication of application: 10.04.2019
(73) Proprietor: Sumitomo Bakelite Co.,Ltd., Tokyo 140-0002 (JP)
(72) Inventor: INOKUCHI, Hideaki, Tokyo 140-0002 (JP); KOIZUMI, Koji, Tokyo 140-0002 (JP); NAKANO, Shogo, Tokyo 140-0002 (JP); OKADA, Wataru, Tokyo 140-0002 (JP); YAMAMOTO, Shuhei, Tokyo 140-0002 (JP)
(74) Representative: Ter Meer Steinmeister & Partner
(86) International application number: PCT/JP2017/017140
(87) International publication number: WO 2017/203943

(56) References cited:
- JP-A- H0 948 023
- JP-A- H05 253 997
- JP-A- H05 269 736
- JP-A- 2011 079 306
- JP-A- 2011 079 306
- JP-A- 2012 131 042
- JP-A- 2012 232 432
- JP-A- 2015 163 468
- JP-A- 2015 163 468
- JP-A- 2015 163 816
- JP-A- 2017 210 616
- US-A1- 2012 126 466
- US-A1- 2013 065 053

## Description

### TECHNICAL FIELD

The present invention relates to a method for producing a fiber-containing particulate resin structure.

### BACKGROUND OF THE INVENTION

In recent years, as substitutes for metal component parts, attention has been paid to cured fiber-reinforced resin products or fiber-reinforced resin molded articles (PTL 1), which are molded using fiber-containing thermosetting resins or fiber-containing thermoplastic resins. Regarding general molding methods for such a cured resin product or a resin molded article, compression molding (PTL 2), transfer molding (PTL 3), transfer-compression molding, injection molding, injection-compression molding (PTL 4), are known.

However, for cured fiber-reinforced resin products or fiber-reinforced resin molded articles, it is known that regarding the fiber to be mixed into a resin, it is preferable to use relatively long fibers (so-called long fibers) having a length of 5 to 30 mm, in order to enhance mechanical strength such as tensile strength, flexural strength, and impact resistance. Thus, in regard to the above-mentioned cured products or molded articles, pellets obtained by solidifying long fibers with a resin, or aggregates obtained by solidifying those pellets are used as a form of a material for supplying a resin or fibers, both of which serve as raw materials (PTL 5). It is disclosed that when such pellets or aggregates are used, fibers having a uniform length can be supplied to into the resin.

Furthermore, in a method for producing a cured fiber-reinforced resin product or a fiber-reinforced resin molded article in the related art, first, pellets obtained by solidifying long fibers with a resin are weighed and supplied into a mold, subsequently the mold is heated to melt the pellets, and thus the fibers are opened. Subsequently, the resin containing the opened fibers is molded by compression molding or the like, and thereby a cured fiber-reinforced resin product or a fiber-reinforced resin molded article is produced.

### DOCUMENTS OF RELATED ART

### PATENT DOCUMENTS

Patent Document 1: Japanese Unexamined Patent Application, First Publication No.
Patent Document 2: Japanese Unexamined Patent Application, First Publication No. H6-246771
Patent Document 3: Japanese Unexamined Patent Application, First Publication No. 2006-130731
Patent Document 4: Japanese Unexamined Patent Application, First Publication No. 2002-127215
Patent Document 5: Japanese Unexamined Patent Application, First Publication No. 2012-096370

JP 2015-163468 A relates to a method for producing a molded article.

US 2013/065053 A1 relates to a method for producing composite pellet for extrusion molding.

JP 2012-232432 A relates to a die for the resin extrusion for extruding a molten resin.

### SUMMARY OF THE INVENTION

### PROBLEMS TO BE SOLVED BY THE INVENTION

However, in conventional production methods of using the above-mentioned pellets or aggregates thereof, there has been a problem that opening of the fibers may occur insufficiently, or the fibers may be unevenly distributed in the resin, and as a result, an enhancement of the mechanical strength of the cured product or the molded article may be insufficient. There has also been a problem that the product quality is not stabilized.

The present invention was achieved in view of the circumstances described above, and it is an object of the invention to provide a method for producing a resin structure with which a cured fiber-reinforced resin product or a fiber-reinforced resin molded article, both having sufficiently enhanced mechanical strength and stable product quality, can be produced.

### MEANS TO SOLVE THE PROBLEMS

In order to solve the problems described above, there is provided a method according to claim 1 for producing a fiber-containing particulate resin structure which has sufficiently enhanced mechanical strength and stable product quality; further preferred embodiments are claimed in the dependent claims.

### EFFECTS OF THE INVENTION

The fiber-containing particulate resin structure obtained by the method of the invention includes a resin and fibers, and since the fibers are dispersed in an opened state in the resin, and at least one of the average density and the average bulk density has a required value, when a cured product or a molded article is produced by using this, a cured fiber-reinforced resin product or a fiber-reinforced resin molded article having sufficiently enhanced mechanical strength and stable product quality can be produced.

According to the method for producing a fiber-containing particulate resin structure of the invention, the above-described fiber-containing particulate resin structure can be produced by obtaining a molten mixture of a resin composition in which fibers are dispersed in an opened state in a molten resin, discharging the molten mixture through a discharge port, and cutting off the resin composition from the discharge port after the diameter of the resin composition that has been discharged through the discharge port has expanded to reach a required range with respect to the diameter of the discharge port.

In regard to the cured fiber-reinforced resin product and the fiber-reinforced resin molded article, since the fractal value representing the dispersed state of the fibers in the resin, and the standard deviation of the alignment tensor value representing the alignment state of the fibers in the resin are in required ranges, the cured fiber-reinforced resin product and the fiber-reinforced resin molded article have sufficiently enhanced mechanical strength and stable product quality.

### BRIEF DESCRIPTION OF DRAWINGS

FIG. 1 is a photograph showing the state in which the resin structures produced by a method according to a first embodiment have aggregated.
FIG. 2 is a schematic diagram for explaining the configuration of the resin structure produced by a method according to the first embodiment to which the invention has been applied.
FIG. 3 is a schematic diagram for explaining the method for producing a fiber-containing particulate resin structure according to the first embodiment to which the invention has been applied.
FIG. 4 is a schematic diagram for explaining the method for producing a fiber-containing particulate resin structure according to a second embodiment to which the invention has been applied.

### EMBODIMENTS FOR CARRYING OUT THE INVENTION

In the following description, the fiber-containing particulate resin structure produced by a method according to an embodiment, together with a method according to the invention for producing the resin structure and with the configurations of a cured fiber-reinforced resin product and a fiber-reinforced resin molded article, both of which use the fiber-containing particulate resin structure as a raw material, will be explained in detail using the attached drawings. The drawings used for the following explanation may show a magnified view of a featuring part for convenience in order to assist understanding of the feature in some cases, and the dimensional ratios of the various constituent elements and the like are not limited to be equal to the actual dimensional ratios.

### <First embodiment>

### (Fiber-containing particulate resin structure)

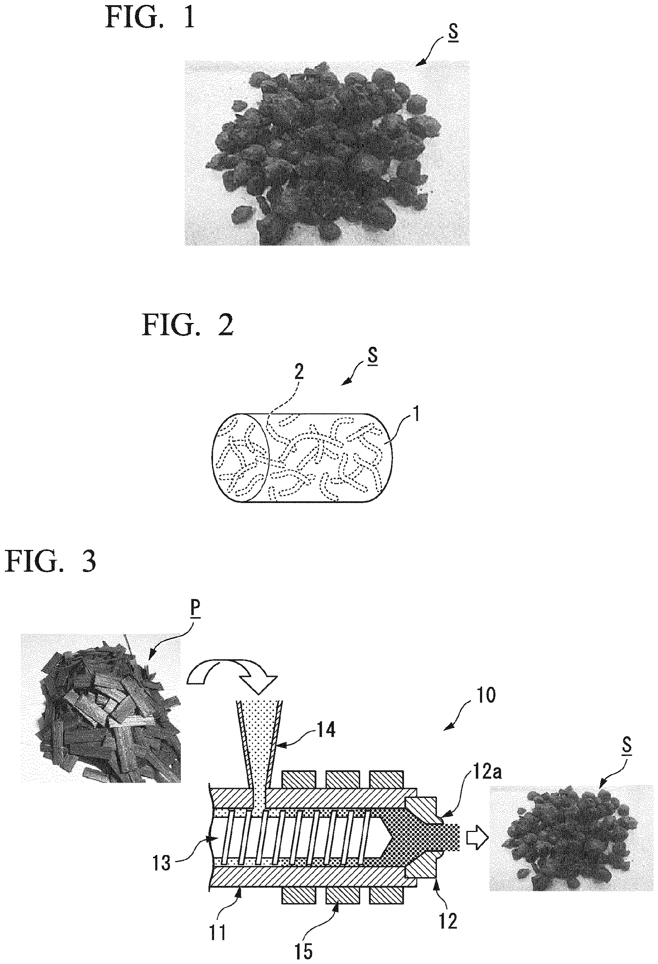

First, the fiber-containing particulate resin structure (hereinafter, simply referred to as "resin structure"), which is produced by the method according to the first embodiment to which the invention has been applied, will be explained. FIG. 1 is a photograph showing the state in which the resin structures produced by the method according to the first embodiment are aggregated. FIG. 2 is a schematic diagram for explaining the configuration of the resin structure produced by the method of the present embodiment.

As shown in FIG. 1, the resin structure S produced by the method of the present embodiment is a particulate structure containing a resin and fibers, in which the fibers are dispersed in an opened state in the resin. Since this resin structure S is in a particulate form, for example, in a case in which the resin structure is used as a raw material for compression molding or the like, the resin structure can be weighed easily. Furthermore, the resin structure S can be used as a raw material at the time of producing a cured fiber-reinforced resin product and a fiber-reinforced resin molded article (hereinafter, may be simply referred to as "cured product and the like"), respectively depending on the resin to be incorporated.

The resin structure S produced by the method of the present embodiment is approximately configured to include a resin 1 and fibers 2, as illustrated in FIG. 2.

### "Resin"

The resin to be applied to the resin structure S produced by the method of the present embodiment is a phenol novolac resin, a resol resin, or a combination thereof. Thereby, the cured fiber-reinforced resin product can be produced at low cost with high dimensional accuracy, and the cured fiber-reinforced resin product thus obtainable exhibits especially excellent heat resistance and can contribute to an enhancement of mechanical strength.

The weight average molecular weight of the phenol novolac resin is 1,000 to 8,000. The weight average molecular weight of the resol resin is 1,000 to 100,000. When the weight average molecular weight is larger than or equal to the lower limit, the viscosity of the resin has a value more suitable for the production of pellets, and when the weight average molecular weight is smaller than or equal to the upper limit, the melt viscosity of the resin has more preferable value from the viewpoint of the moldability (ease of molding) of the cured fiber-reinforced resin product. The weight average molecular weight of the phenolic resin can be measured by, for example, gel permeation chromatography (GPC) and can be defined as the weight molecular weight calculated relative to polystyrene standards.

Examples of the epoxy resin include bisphenol resins such as a bisphenol A type epoxy resin, a bisphenol F type epoxy resin, and a bisphenol AD type phenolic resin; novolac type epoxy resins such as a phenol novolac type epoxy resin and a cresol novolac type epoxy resin; brominated epoxy resins such as a brominated bisphenol A type epoxy resin and a brominated phenol novolac type epoxy resin; biphenyl type epoxy resins; naphthalene type epoxy resins; and tris(hydroxyphenyl)methane type epoxy resins. These epoxy resins can be used singly or in combination of two or more kinds thereof. Among these, particularly, a bisphenol A type epoxy resin, a phenol novolac type epoxy resin, and a cresol novolac type epoxy resin, all of which have relatively low molecular weights, are preferred. Thus, the fluidity of the resin structure S can be increased thereby, and accordingly, handleability or moldability (ease of molding) of the resin structure S at the time of producing a cured fiber-reinforced resin product can be further improved. Furthermore, from the viewpoint of heat resistance of the cured fiber-reinforced resin product, a novolac type epoxy resin is preferred, and particularly a tris(hydroxyphenyl)methane type epoxy resin is preferred.

The bismaleimide resin is not particularly limited so long as it is a resin having a maleimide group at each of the two terminals of the molecular chain; however, a resin further having a phenyl group is preferred. Specifically, for example, a resin represented by the following Formula (1) can be used. However, the bismaleimide resin may have a maleimide group that is bonded to a position other than the two terminals of the molecular chain.

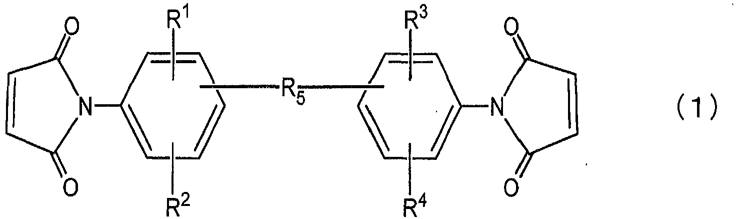

In Formula (1), R¹ to R⁴ each represent a hydrogen atom or a substituted or unsubstituted hydrocarbon group having 1 to 4 carbon atoms; and R⁵ represents a substituted or unsubstituted divalent organic group. Here, an organic group is a hydrocarbon group which may have a heteroatom, and examples of the heteroatom include O, S, and N.

R⁵ is preferably a hydrocarbon group having a main chain in which a methylene group, an aromatic ring, and an ether bond (-O-) are bonded in any arbitrary order, and more preferably, R⁵ is a hydrocarbon group in which the total number of methylene groups, aromatic rings, and ether bonds that are bonded in any arbitrary order in the main chain is 15 or less.

In the middle of the main chain, a substituent and/or a side chain may be bonded thereto, and specific examples thereof include, for example, a hydrocarbon group having three or fewer carbon atoms, a maleimide group, and a phenyl group.

Specific examples include N,N'-(4,4'-diphenylmethane)bismaleimide, bis(3-ethyl-5-methyl-4-maleimidophenyl)methane, 2,2-bis[4-(4-maleimidophenoxy)phenyl]propane, m-phenylenebismaleimide, p-phenylenebismaleimide, 4-methyl-1,3-phenylenebismaleimide, N,N'-ethylenedimaleimide, and N,N'-hexamethylenedimaleimide, and these can be used singly or in combination of two or more kinds thereof.

The percentage content of the resin in the resin structure S is not particularly limited; however, the percentage content is preferably from 5% by mass to 70% by mass, and more preferably from 10% by mass to 60% by mass. In a case in which the percentage content of the resin is larger than or equal to the lower limit, the binding strength to other materials that constitute the resin structure S is further increased. Furthermore, in a case in which the percentage content of the resin is smaller than or equal to the upper limit, the effects provided by the fibers that will be described below are more effectively exhibited.

### "Fibers"

The average length (average fiber length) of the fibers included in the resin structure S of the present embodiment is preferably from 1 mm to 15 mm, more preferably from 2 mm to 10 mm, and even more preferably from 2 mm to 8 mm. Thereby, a cured product that is finally obtained or the like can be made to have superior mechanical strength. Furthermore, in a case in which the average fiber length is larger than or equal to the lower limit, the shape stability and impact resistance of the cured product and the like are further enhanced. In a case in which the average fiber length is smaller than or equal to the upper limit, the resin structure S has more preferred fluidity at the time of molding the cured product and the like, and the compressive strength or the flexural strength is further increased.

The average length (average fiber length) of the fibers included in the resin structure S of the present embodiment can be calculated by a procedure of the following processes (1) to (3).
(1) The entire structure is heated at 550°C using an electric furnace, the resin is vaporized, and then only the fibers are taken out.
(2) The lengths of the fibers are measured using a microscope (number of fibers measured: 500 fibers for one sample).
(3) The weight average fiber length is calculated from the fiber lengths thus measured.

The average diameter of the fibers is preferably 5 µm to 20 µm, more preferably 6 µm to 18 µm, and even more preferably 7 µm to 16 µm. In a case in which the average diameter of the fibers is larger than or equal to the lower limit, the shape stability of the fibers at the time of molding of the cured product and the like is further enhanced. Furthermore, in a case in which the average diameter of the fibers is smaller than or equal to the upper limit, moldability of the cured product and the like is further enhanced.

The cross-sectional shape of the fibers is not particularly limited; however, the cross-sectional shape may be any of approximately circular shapes such as a circular shape and an elliptical shape; polygonal shapes such as a triangular shape, a quadrilateral shape, and a hexagonal shape; and irregular shapes such as a flat shape and a star shape.

Among these, it is particularly preferable that the cross-sectional shape of the fibers is an approximately circular shape or a flat shape. Thus, the smoothness of the surface of the cured product and the like can be enhanced thereby. Furthermore, handleability at the time of molding of the cured product and the like is further enhanced, and moldability of the cured product and the like is further improved.

The fibers are glass fibers.

In a case in which glass fibers are used, uniformity of the cured product and the like per unit volume is enhanced, and especially satisfactory moldability of the cured product and the like is obtained. Furthermore, since the uniformity of the cured product and the like is enhanced, the uniformity of the internal stress in the cured product and the like is increased, and as a result, undulation of the cured product and the like is decreased. Furthermore, abrasion resistance of the cured product and the like under high load can be further enhanced.

Specific examples of the glass that constitutes glass fibers include, for example, E glass, C glass, A glass, S glass, D glass, NE glass, T glass, and H glass. Among these, the glass that constitutes glass fibers is particularly preferably E glass, T glass, or S glass. By using these glass fibers, elasticity increase of the fibers can be achieved, and the coefficient of thermal expansion of the fibers can also be reduced.

In the method of the present invention, the fibers have been subjected to a surface treatment with a silane-based coupling agent.

Examples of the silane-based coupling agent include an epoxy silane coupling agent, a cationic silane coupling agent, an aminosilane coupling agent, a vinylsilane coupling agent, a mercaptosilane coupling agent, a methacrylsilane coupling agent, a chlorosilane coupling agent, and an acrylsilane coupling agent.

The percentage content of the fibers in the resin structure S is preferably from 20% by mass to 80% by mass, and more preferably from 40% by mass to 70% by mass. Thereby, the mechanical strength of the cured product and the like thus obtainable can be increased more efficiently.

As will be described below, the resin structure S produced by the method of the present embodiment is a forced granulated product that is mechanically granulated using an injection unit of an injection molding machine or an extrusion granulating machine, which has component parts such as a screw and a nozzle. Specifically, it is more preferable that the resin structure S is an extrusion granulated product, which is granulated by extrusion granulation. More specifically, it is more preferable that the resin structure S is a single-screw extrusion granulated product having an approximately columnar shape (approximately cylindrical shape), a straw bag shape, an approximately spherical shape, or the like, which has been extruded through one or more discharge ports (openings) provided in a nozzle of an injection unit of an injection molding machine, an extrusion granulator, or the like, as illustrated in FIG. 2. Furthermore, since granulation can be carried out even without using a solvent at the time of granulating, it is one preferred embodiment to perform granulation without using a solvent.

### "Other components"

The resin structure S may further include a curing agent, a curing aid, a filler material, a mold release agent, a pigment, a sensitizer, an acid proliferating agent, a plasticizer, a flame retardant, a stabilizer, an oxidation inhibitor, and an antistatic agent, as necessary.

The curing agent can be selected and used as appropriate according to the type of the resin or the like, and the curing agent is not limited to a particular compound.

In a case in which, for example, a phenolic resin is used as the resin, the curing agent can be selected for use from a bifunctional or higher-functional epoxy-based compound, an isocyanate, and hexamethylenetetramine.

In a case in which an epoxy resin is used as the resin, the curing agent can be selected for use from amine compounds such as an aliphatic polyamine, an aromatic polyamine, and dicyaminediamide; acid anhydrides such as an alicyclic acid anhydride and an aromatic acid anhydride; polyphenol compounds such as a novolac type phenol resin; and imidazole compounds. Among these, it is preferable to select a novolac type phenolic resin as the curing agent from the viewpoints of handling workability and environmental issues.

Particularly, in a case in which a phenol novolac type epoxy resin, a cresol novolac type epoxy resin, or a tris(hydroxyphenyl)methane type epoxy resin is used as the epoxy resin, it is preferable to select and use a novolac type phenolic resin as the curing agent. The heat resistance of the cured fiber-reinforced resin product can be enhanced thereby.

In the case of using a curing agent, the percentage content of the curing agent in the resin structure S is set as appropriate according to the type of the curing agent or resin used; however, it is preferable that the percentage content is, for example, from 0.1% by mass to 30% by mass. Thereby, a cured fiber-reinforced resin product can be easily formed into any arbitrary shape.

The curing aid is not particularly limited; however, for example, an imidazole compound, a tertiary amine compound, or an organic phosphorus compound can be used.

In the case of using a curing aid, the percentage content of the curing aid in the resin structure S is set as appropriate according to the type of the curing aid or the curing agent used; however, the percentage content is preferably, for example, from 0.001% by mass to 10% by mass. Since the resin structure S can be cured more easily thereby, a cured fiber-reinforced resin product can be molded more easily.

The filler material is not particularly limited; however, examples include an inorganic filler material and an organic filler material. Examples of the inorganic filler material include calcium carbonate, clay, silica, mica, talc, wollastonite, glass beads, milled carbon, and graphite, and these can be used singly or in combination of two or more kinds thereof. Examples of the organic filler material include polyvinyl butyral, acrylonitrile-butadiene rubber, pulp, and wood powder, and these can be used singly or in combination of two or more kinds thereof. Among these, particularly, from the viewpoint that the effect of enhancing toughness of the cured product and the like is further increased, it is preferable to use acrylonitrile-butadiene rubber as the filler material (organic filler material).

In the case of using a filler material, the percentage content of the filler material in the resin structure S is not particularly limited; however, it is preferable that the percentage content is from 1% by mass to 30% by mass. The mechanical strength of the cured product and the like can be further enhanced thereby.

The mold release agent is not particularly limited; however, zinc stearate, calcium stearate, or the like can be used.

In the case of using a mold release agent, the percentage content of the mold release agent in the resin structure S is not particularly limited; however, it is preferable that the percentage content is from 0.01% by mass to 5.0% by mass. The cured product and the like can be easily formed into any arbitrary shape thereby.

Here, in regard to the resin structure S produced by the method of the present embodiment, the state in which the fibers in the resin are opened means a state in which fiber bundles are scattered, and the fibers are spread in the resin.

In regard to the resin structure S produced by the method of the present embodiment, the state in which the fibers are dispersed in the resin means a state in which the fibers as a whole are substantially not acknowledged to be aligned in one direction only.

In regard to the resin structure S produced by the method of the present embodiment, the average particle size is preferably from 1 mm to 15 mm, more preferably from 2 mm to 15 mm, and even more preferably from 3 mm to 12 mm. When the average particle size is in the above-mentioned preferred range, weighing can be easily achieved at the time of molding the cured product and the like by compression molding, and the resin structure can be more suitably used as a raw material.

The average particle size of the resin structure S produced by the method of the present embodiment can be determined by the sieve analysis test of JIS Z8815. Furthermore, the average particle size is defined as the particle size at an integrated value of 50% in a particle size distribution (medium diameter in a cumulative distribution).

The resin structure S produced by the method of the present embodiment is preferably such that at least one, and preferably both of, the value of the average density and the value of the average bulk density is in the required range.

Regarding the resin structure S, it is preferable that the value of the average density is in the range of 0.20 to 1.00 (g/cm³), and more preferably in the range of 0.30 to 0.80 (g/cm³). The average density of the resin structure S can be measured by a method for measuring density and specific gravity based on the geometric measurement as defined in "JIS Z8807".

In regard to the resin structure S, it is preferable that the value of the average bulk density is in the range of 0.15 to 0.80 (g/cm³), and more preferably in the range of 0.20 to 0.70 (g/cm³). Regarding the method for measuring the average bulk density of the resin structure S, the average bulk density can be measured using a general powder characteristics evaluation apparatus (manufactured by Hosokawa Micron Corporation, "POWDER TESTER Model PT-X" or the like).

Specifically, a container having a volume of 100 (cm³) is used, the resin structure is caused to freely fall therein through a chute, and the weight is measured without tapping. Thus, the average bulk density can be determined as a value obtained by dividing the weight by the volume of the container.

The resin structure S produced by the method of the present embodiment can be maintained in a state in which opened fibers are dispersed in the resin, by having at least one of the value of the average density and the value of the average bulk density in the above-mentioned value range. Thereby, when the resin structure S of the present embodiment is used as a raw material for compression molding, a cured fiber-reinforced resin product or a fiber-reinforced resin molded article, which has sufficiently enhanced mechanical strength and stable product quality, can be produced.

The resin structure S produced by the method of the present embodiment is such that when a cross-section of the resin structure is viewed, it is preferable that the area fraction of the fibers is in the range of 10% to 35%, and more preferably in the range of 15% to 30%. As the area fraction of the fibers is in the above-mentioned preferred range when a cross-section of the resin structure is viewed, it can be confirmed that opened fibers are maintained in the resin in a dispersed state.

Particularly, in a case in which the resin structure S produced by the method of the present embodiment is a single-screw extrusion granulated product as illustrated in FIG. 2, when a cross-section of the resin structure is viewed from a plane perpendicular to the direction of the axis (extrusion) of a pillar-shaped object, it is preferable that the area fraction of the fibers is in the above-mentioned preferred range. Since the product quality of the resin structure S is stabilized thereby, for example, when the resin structure S is used as a raw material for compression molding or the like, a cured fiber-reinforced resin product or a fiber-reinforced resin molded article, each having more stabilized product quality, can be easily produced.

The measurement of the area fraction of the fibers obtainable when a cross-section of the resin structure is viewed can be carried out using, for example, an X-ray CT apparatus (manufactured by Yamato Scientific Co., Ltd., "TDM1000-II" or the like). Regarding the measurement method, specifically, the area of the fibers is extracted from a cross-sectional image measured by X-ray CT, and the area fraction can be determined.

### (Method for producing fiber-containing particulate resin structure)

Next, an example of the method for producing the resin structure S of the present embodiment will be explained. FIG. 3 is a schematic diagram for explaining a method for producing a fiber-containing particulate resin structure, which is a first embodiment to which the invention has been applied.

The method for producing the resin structure S of the present embodiment is roughly configured to include a step of producing a pellet by solidifying fiber bundles with a resin (preparatory step); a step of heating the pellet and obtaining a molten mixture of a resin composition in which fibers are dispersed in the molten resin in an opened state (first step); and a step of discharging the molten mixture through a discharge port, and then cutting off the resin composition from the discharge port after the diameter of the resin composition that has been discharged through the discharge port has expanded to reach a required range with respect to the diameter of the discharge port (second step).

### "Preparation step"

In the preparation step, a pellet that is used as a raw material at the time of producing the resin structure S is prepared. Specifically, first, as illustrated in FIG. 3, a pellet P obtained by solidifying bundles of long fibers with a resin is molded.

Here, the pellet P is roughly configured to include the resin, fibers, and other components explained in connection with the resin structure S described above.

The average length of the fibers included in the pellet P is from 3 mm to 50 mm, and preferably from 5 mm to 30 mm. Thereby, the cured product and the like that are finally obtained can be made to have superior mechanical strength. Furthermore, in a case in which the average length of the fibers is greater than or equal to the lower limit, the shape stability of the cured product and the like is further enhanced.

Regarding the method for producing the pellet P, for example, a powder impregnation method of using a roving can be used according to the description of Japanese Unexamined Patent Application, First Publication No. 2002-509199.

A powder impregnation method of using a roving is a method of coating fibers by a dry method using a fluidized bed technology. Specifically, first, materials other than fibers, such as a resin, are caused to adhere directly to the fibers from a fluidized bed without preliminary kneading. Next, the materials such as a resin are fixed to the fibers by heating for a short time period. Then, the fibers thus coated are passed through a conditioning section including a cooling apparatus and optionally a heating apparatus. Subsequently, the coated fibers that have been cooled are drawn and cut into a desired length using a strand cutter. Thereby, a pellet P as illustrated in FIG. 3 can be obtained.

### "First step"

In the first step, the pellet P molded in the preparation step is heated to melt the resin, and a molten mixture of a resin composition in which the fibers are dispersed in the molten resin in an opened state is obtained. In the present embodiment, as illustrated in FIG. 3, the pellet P is melted and mixed using an injection unit 10 of an injection molding machine, and thereby opening of the fibers and dispersion of the fibers included in the pellet P are promoted.

The injection unit 10 of an injection molding machine is roughly configured to include, as illustrated in FIG. 3, a cylinder 11; a nozzle 12 provided at the tip of the cylinder 11; a screw 13 capable of rotating inside the cylinder 11; an input port 14 for introducing the pellet P, which serves as a raw material for the resin and the fibers, into the space between the cylinder 11 and the screw 13; and a heater 15 for heating the resin raw material through the cylinder 11.

Specifically, first, as illustrated in FIG. 3, the pellet P is supplied through the input port 14 to the injection unit 10 of the injection molding machine that has been heated. When the pellet P thus supplied is placed inside the cylinder 11, the resin melts. At this time, it is preferable to adjust the temperature inside the cylinder 11 to the range of 70 to 140 (°C), and more preferably to the range of 80 to 130 (°C). Then, the fibers are opened by the shear force generated by rotation of the screw 13. As a result, a molten mixture in which the opened fibers are dispersed in the molten resin is obtained.

### "Second step"

Next, in the second step, the molten mixture is extruded through a discharge port 12a provided at the tip of nozzle 12. Specifically, as the screw 13 is rotated in the cylinder 11, a stress facing the direction of the nozzle 12 is applied to the molten mixture.

Here, it is preferable that the circumferential speed of the screw is adjusted to the range of 16 to 340 (mm/sec), and more preferably to the range of 30 to 250 (mm/sec), with respect to the injection unit 10 of the injection molding machine. Furthermore, it is preferable that the temperature of the extruded resin is adjusted to the range of 70 to 140 (°C), and more preferably to the range of 80 to 130 (°C). By adjusting the screw circumferential speed and the temperature to the preferred ranges described above, opening and dispersing of the fibers in the molten resin can be effectively carried out.

The diameter of the discharge port 12a is not particularly limited, and the diameter can be selected as appropriate according to the size of the desired resin structure S. Specifically, it is preferable that the diameter of the discharge port 12a is adjusted to the range of 3 to 20 (mm), and more preferably to the range of 5 to 12 (mm). When the diameter of the discharge port is adjusted to the preferred range described above, it is preferable because, for example, weighing is made easier when the resin structure is used as a raw material for compression molding or the like.

Next, the molten mixture is discharged through the discharge port 12a. Next, after the diameter of the resin composition that has been discharged through the discharge port 12a has expanded to reach a required range with respect to the diameter of the discharge port 12a, the resin composition is cut off from the discharge port 12a. Here, the range of the expansion is from 110% to 220%, and preferably from 120% to 200%. By having the diameter expanded to reach the above-mentioned range, the resin structure S of the present embodiment is obtained as illustrated in FIG. 3.

When the resin composition that has expanded is cut off from the discharge port 12a, the resin composition may be collected as the particulate resin structure S by cutting off the resin composition immediately after expansion. Furthermore, after the resin composition is discharged through the discharge port 12a and then expands, the resin composition may be cut off from the discharge port 12a when the resin composition has acquired a certain length. Subsequently, the resin composition may be cut at a desired interval and used as the particulate resin structure S.

In the method for producing the resin structure S of the present embodiment, opening of the fibers proceeds; however, since damage also occurs, the fiber length in the resin structure S is shortened. Therefore, it is preferable that fibers longer than the fiber length required for the resin structure S are included in the pellet P that is introduced into the injection unit 10 of an injection molding machine as a raw material.

The length of the fibers after being opened using the injection unit 10 of the injection molding machine also varies depending on the shape of the screw 13, the shape of the nozzle 12, or the like. Therefore, it is preferable to appropriately select and use a shape suitable for preventing damage of the fibers.

### (Cured fiber-reinforced resin product)

Next, the configuration of the cured fiber-reinforced resin product of the present embodiment will be explained.

The cured fiber-reinforced resin product of the present embodiment is a product produced by using a resin structure S mentioned above, which contains a thermosetting resin as the resin, as the raw material. That is, the cured fiber-reinforced resin product of the present embodiment is a product obtainable by curing a particulate fiber-containing resin structure containing a thermosetting resin and fibers dispersed in the resin in an opened state.

In regard to the cured fiber-reinforced resin product of the present embodiment, the fractal value representing the dispersed state of the opened fibers in the resin (fractal dimension (D) value) is preferably from 0.3 to 1.0, more preferably from 0.32 to 0.9, and even more preferably from 0.4 to 0.9. When the fractal value is in the above-described preferred range, it implies that there are fewer unopened fibers, and the fibers are not localized in the resin. Thus, it can be evaluated that the fibers in the resin have satisfactory opening and dispersed state.

Furthermore, in regard to the cured fiber-reinforced resin product of the present embodiment, the standard deviation of the alignment tensor value representing the alignment state of the fibers in the resin is preferably from 0.01 to 0.24, more preferably from 0.05 to 0.20, and even more preferably from 0.05 to 0.15. When the standard deviation of the alignment tensor value is in the above-described preferred range, the alignment of the fibers tends to be close to random alignment, and it can be evaluated that the fibers in the resin have a satisfactory dispersed state.

Here, the evaluation of the dispersed (opened) state and alignment state of the fibers in the cured fiber-reinforced resin product can be calculated from data measured using X-ray CT (computed tomography), by which a cured product as an object is imaged with X-rays from various directions and a reconstruction treatment is carried out by means of a computer. Thus, the cured product as an object can be evaluated in a non-invasive manner thereby. Regarding the X-ray examination apparatus, for example, "TDM1000-II" manufactured by Yamato Scientific Co., Ltd. can be used.

The fractal dimension (D) value for evaluating the dispersed state of fibers in a resin is specifically calculated by a procedure of the following processes (1) to (4).
(1) First, a two-dimensional image obtainable from the data measured using X-ray CT is binarized.
(2) Next, the entirety of the two-dimensional image is divided such that the X-direction and the Y-direction are respectively divided equally into n parts (6 ≤ n ≤ 82). Thus, the entire image is divided into n² pieces of boxes thereby.
(3) Next, for each n value, the fiber area fraction in each box is calculated, and the coefficient of variation (Cᵥ(n) = σ / a) is calculated from the average value (a) and the standard deviation (σ) of these fiber area fractions.
(4) Next, a double logarithmic graph representing the reciprocal of the n value, "1/n" on the x-axis, and the coefficient of variation "(Cᵥ(n)" on the y-axis, is plotted for the various n values, and a value obtained by multiplying the gradient of an approximate straight line obtained therefrom by "-1" is designated as the fractal dimension (D) value.

As the fractal dimension (D) value is larger, it can be evaluated that the fibers in the resin have higher dispersibility.

The standard deviation of the alignment tensor value for evaluating the alignment state of fibers in a resin is specifically calculated by a procedure of the following processes (1) to (4).
(1) First, a three-dimensional model is reconstituted from data measured using X-ray CT.
(2) In regard to the three-dimensional model, the fibers and the resin are binarized and separated.
(3) The fiber direction tensors (Txx, Tyy, and Tzz) are calculated. Meanwhile, Txx, Tyy, and Tzz represent the alignment tensors in the directions of the X-axis, the Y-axis, and the Z-axis, respectively. Furthermore, the relation: Txx + Tyy + Tzz = 1 is established. When each alignment tensor value is 0.33, it can be evaluated that the fibers are randomly aligned.
(4) The standard deviations are calculated from the Txx, Tyy, and Tzz values obtained from data with total data number of about 2,000 in the analysis range.

The cured fiber-reinforced resin product of the present embodiment is such that, as described above, since the fractal value representing the dispersed state of the fibers in the resin, and the standard deviation of the alignment tensor values representing the alignment state of the fibers in the resin are in required ranges, the cured product has sufficiently enhanced mechanical strength. Furthermore, the product quality of the cured product is stabilized.

Next, in a reference embodiment not encompassed by the present invention, an example of the method for producing a cured fiber-reinforced resin product of the present embodiment will be explained.

The cured fiber-reinforced resin product can be produced by general compression molding or the like using a resin structure S containing a thermosetting resin as a molding material.

Specifically, first, the resin structure S as a molding material is preliminarily heated. Regarding the preliminary heating, a hot air circulating dryer or an infrared heat may be utilized; however, high frequency preheating is most effective. It is preferable that the preliminary heating can be selected as appropriate according to the type or the amount of use of the resin.

Next, a required amount of the particulate resin structure S is weighed and charged into the cavity of a mold. Subsequently, a low pressure (for example, about 5 MPa) is slowly applied to the material, and the material is softened and fluidized. Immediately before or immediately after completion of mold clamping, the pressure is first released (degassing operation), and then a high pressure (for example, a molding pressure of about 15 to 30 MPa) is immediately applied. The mold is closed and cut, and curing is carried out for a predetermined time.

After curing, the molded article is removed from the mold, and thus the cured fiber-reinforced resin product is obtained.

When effective preheating is carried out by high-frequency preheating, the above-mentioned degassing operation can be omitted. Furthermore, a polycondensation type resin molding material requires a degassing operation; however, with an addition polycondensation type resin molding material, it is generally not necessary to perform a degassing operation.

It is preferable that the molding conditions such as molding pressure, molding temperature, and curing time are selected as appropriate according to the resin structure S including a thermosetting resin, which is a molding material; however, the molding pressure during a high-pressure operation can be adjusted to 20 to 50 MPa, the molding temperature is about 150°C to 200°C, and the curing time can be adjusted to about 1 to 10 minutes.

### (Fiber-reinforced resin molded article)

Next, in a reference embodiment not encompassed by the present invention, the configuration of the fiber-reinforced resin molded article of the present embodiment will be explained.

The fiber-reinforced resin molded article of the present embodiment is a product produced by using a resin structure S as described above as a raw material, the resin structure including a thermoplastic resin as the resin. That is, the fiber-reinforced resin molded article of the present embodiment is a product obtained by molding (shaping) a particulate fiber-containing resin structure containing a thermoplastic resin and fibers dispersed in the resin in an opened state.

The fiber-reinforced resin molded article of the present embodiment is such that, similarly to the above-mentioned cured fiber-reinforced resin product, the fractal value representing the dispersed state of the fibers in the resin, and the standard deviation of the alignment tensor value representing the alignment state of the fibers in the resin are in required ranges. Therefore, the fiber-reinforced resin molded article has sufficiently enhanced mechanical strength, and the product quality of the molded article is stable.

The fiber-reinforced resin molded article of the present embodiment can also be produced by a method similar to that for the cured fiber-reinforced resin product.

As explained above, when the resin structure (fiber-containing particulate resin structure) S of the present embodiment is used, since the resin structure includes a resin and fibers, the fibers being dispersed in the resin in an opened state, and at least one of the average density and the average bulk density has a required value, the mechanical strength of a cured fiber-reinforced resin product or a fiber-reinforced resin molded article produced by using this resin structure can be sufficiently enhanced, and also, stable product quality can be provided.

According to the method for producing the resin structure S of the present embodiment, the resin structure S can be easily produced by obtaining a molten mixture of a resin composition having fibers dispersed in an opened state in a molten resin by using an injection unit 10 of an injection molding machine, discharging the molten mixture through a discharge port 12a, and cutting off the resin composition from the discharge port 12a after the diameter of the resin composition that has been discharged through the discharge port 12a has expanded to reach a required range with respect to the diameter of the discharge port 12a.

When the cured fiber-reinforced resin product and the fiber-reinforced resin molded article of the present embodiment are used, since the cured product and the molded article are produced using the resin structure S as a molding material, and the fractal value representing the dispersed state of the fibers in the resin, and the standard deviation of the alignment tensor value representing the alignment state of the fibers in the resin are in required ranges, the cured product and the molded article have sufficiently enhanced mechanical strength and stable product quality.

### <Second embodiment>

Next, a second embodiment to which the invention has been applied will be explained. Specifically, the second embodiment is different from the above-described first embodiment in terms of the method for producing the resin structure S. Therefore, the method for producing the resin structure S will be explained in detail, and for other contents that are common in both embodiments, further explanations will not be repeated.

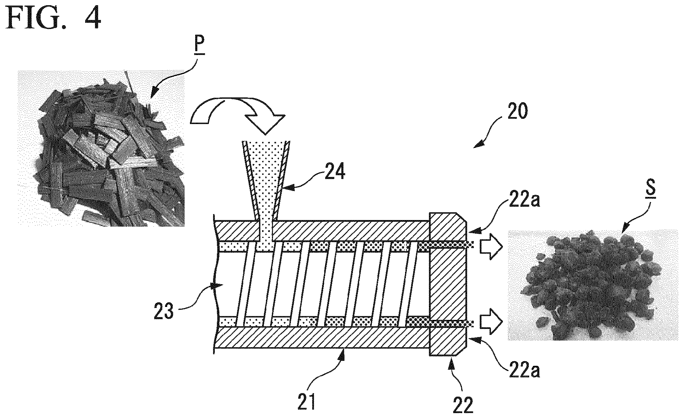

FIG. 4 is a diagram for explaining the configuration of the method for producing the resin structure S, which is a second embodiment to which the invention has been applied.

### "First step"

In the first step, a pellet P molded in the preparation step is heated to melt the resin, and thus a molten mixture of a resin composition in which the fibers are dispersed in the molten resin in an opened state is obtained. In the present embodiment, as illustrated in FIG. 4, by melting and mixing the materials using a single-screw extruder 20, opening of the fibers included in the pellet P and dispersion of the fibers are promoted similarly to the injection unit 10 of the injection molding machine according to the first embodiment described above.

Here, the single-screw extruder 20 is approximately configured to include, as illustrated in FIG. 4, a cylindrical-shaped barrel 21 equipped with a heating mechanism; a die 22 provided at the tip of this barrel 21; a screw 23 capable of rotating inside the barrel 21; and an input port 24 for introducing the pellet P, which serves as a raw material for the resin and the fibers, into the space between the barrel 21 and the screw 23. The die 22 is provided with a plurality of discharge ports 22a, and these discharge ports 22a are arranged so as to be placed at an equal interval along the circumferential direction when the die 22 is viewed in a plan view. Furthermore, the temperature of the barrel 21 is provided with a gradient such that the input port 24 side has a lower temperature, while the tip side where the die 21 is provided has a higher temperature.

Specifically, first, as illustrated in FIG. 4, the pellet P is supplied to the barrel 21 that has been heated, through the input port 24. Regarding the pellet P thus supplied, the resin melts inside the barrel 21. Then, the fibers are opened by the shear force caused by rotation of the screw 23. Thus, a molten mixture in which opened fibers are dispersed in a molten resin is obtained thereby.

### "Second step"

Next, in a second step, the molten mixture is extruded through a plurality of discharge ports 22a provided at the tip of the die 22. Specifically, when the screw 23 inside the barrel 21 rotates, a stress facing the direction of the die 22 is applied to the molten mixture.

Here, it is preferable that the circumferential speed of the screw is adjusted to the range of 20 to 400 (mm/sec), and more preferably to the range of 40 to 300 (mm/sec), for the single-screw extruder 20. Furthermore, it is preferable that the temperature of the extruded resin is adjusted to the range of 70°C to 140°C, and more preferably to the range of 80°C to 130°C. By adjusting the circumferential speed of the screw and the temperature to the above-described preferred ranges, opening and dispersion of the fibers in the molten resin can be carried out effectively.

The diameter of the various discharge ports 22a are not particularly limited and can be selected as appropriate according to the desired size of the resin structure S. Specifically, it is preferable that the diameter of the discharge port 22a is adjusted to the range of 3 to 15 (mm), and more preferably to the range of 5 to 12 (mm). By having the above-described preferred pressure range, weighing can be easily carried out when the resin structure is used as a raw material for compression molding, and therefore, it is preferable.

Next, the molten mixture is discharged through the various discharge ports 22a. Next, after the diameter of the resin composition that has been discharged through the discharge ports 22a has expanded to reach a required range with respect to the diameter of the discharge ports 22a, the resin composition is cut off from the discharge ports 22a. Here, regarding the range of expansion, a range identical to that for the first embodiment as described above can be employed. Thereby, the resin structure S of the present embodiment can be obtained as illustrated in FIG. 4.

Meanwhile, also for the present embodiment, the resin composition may be collected as the particulate resin structure S by immediately cutting off the resin composition after expansion, when the resin composition that has expanded is cut off from the discharge ports 22a, similarly to the first embodiment described above. Furthermore, it is also acceptable that after the resin composition has been discharged through the discharge ports 22a and expanded, the resin composition is cut off from the discharge ports 22a when the resin composition acquires a certain length, and then a particulate resin structure S may be obtained by cutting the resin composition at a desired interval.

In the method for producing the resin structure S of the present embodiment, opening of the fibers proceeds; however, damage also occurs. Therefore, the fiber length in the resin structure S is shortened. Accordingly, regarding the pellet P that is introduced into the single-screw extruder 20 as a raw material, it is preferable to use a pellet including fibers having a length that is longer than the fiber length required for the resin structure S.

It is known that the fiber length after the fibers are opened using the single-screw extruder 20 may also be changed depending on the shape of the screw 23, the shape of the discharge port 22a provided in the die 22, or the like. Therefore, it is preferable to appropriately select and use a shape that is suitable for preventing damage of the fibers.

As explained above, when the method for producing the resin structure S according to the second embodiment of the invention is used, effects similar to the effects of the method for producing a molded article according to the first embodiment as described above are obtained. That is, the resin structure S described above can be produced more efficiently by obtaining a molten mixture in which fibers are dispersed in a molten resin in an opened state by using a single-screw extruder 20, discharging the molten mixture through a plurality of discharge ports 22a, and cutting off the resin composition from the discharge ports 22a after the diameter of the resin composition after being discharged has expanded to a required range with respect to the diameter of the discharge ports 22a.

The technical scope of the invention is not limited to the embodiments described above, and various modifications can be applied to the extent that the gist of the invention is maintained. For example, in the first and second embodiments described above, the case in which the resin structure S is applied to general compression molding at the time of producing a cured product and the like using the resin structure S has been explained as an example; however, the embodiments are not limited to this. For example, the resin structure may be applied to transfer molding and injection molding, or may be applied to combined processes such as transfer-compression molding and injection-compression molding.

In the methods for producing a resin structure S of the first and second embodiments described above, the case of using the pellet P has been explained as an example of the embodiment of supplying a resin and fibers that serve as raw materials to an injection unit 10 of an injection molding machine or a single-screw extruder 20; however, the invention is not intended to be limited to this. For example, aggregates obtained by further solidifying the pellet P may be used, or a resin and fibers may be introduced separately. In the case of using the pellet P, a desired resin structure S may be produced by additionally introducing the resin or fibers.

In the method for producing a resin structure S of the second embodiment described above, the case in which a single-screw extruder 20 is used has been explained as an example of the extruder; however, the invention is not limited to this. For example, it is acceptable to produce the resin structure S using an extruder having two or more screws. The configuration of the single-screw extruder 20 illustrated in FIG. 4 is an example, and the shape of the screw 23, the shape of the discharge ports 22a provided in the die 22, and the like are not particularly limited.

### EXAMPLES

In the following description, the effects of the present invention will be explained in detail using Examples and Comparative Examples; however, the present invention is not intended to be limited to the following Examples.

### <Production of pellet a>

Pellet a was produced as follows.

First, glass fibers that had been subjected to a surface treatment with a silane coupling agent (E glass, glass fiber roving 1084 manufactured by PPG Industries, Inc., average diameter: 15 µm) were prepared as raw fibers of the fibers.

Next, 36.0 parts by mass of a phenolic resin (manufactured by Sumitomo Bakelite Co., Ltd., trade name: SUMILITE RESIN PR-51470, weight average molecular weight: 2,800: phenol novolac resin) as a resin, 6.0 parts by mass of hexamethylenetetramine as a curing agent, 1.0 part by mass of magnesium oxide as a curing aid, 1.0 part by mass of calcium stearate as a mold release agent, and 1.0 part by mass of carbon black as a pigment were mixed, and thus a resin mixture a was obtained.

Next, 55 parts by mass of the glass fibers that had been subjected to a surface treatment were coated with 45 parts by mass of the resin mixture a thus obtained, by using a fluidized bed technology. The glass fibers with the resin mixture a were melted using a heater that had been heated to 400°C and fixed, and then the resin mixture as cooled.

Next, the glass fibers coated with the resin mixture a were cut so as to obtain fibers having an average length of 20 mm, using a strand cutter. Thereby, pellets a were obtained.

### <Production of pellet b>

Pellet b was produced as follows.

Glass fibers that had been subjected to a surface treatment using a silane coupling agent (E glass, glass fiber roving 1084 manufactured by PPG Industries, Inc., average diameter: 15 µm) were prepared as raw fibers for the fibers.

Next, 8.0 parts by mass of a phenolic resin (manufactured by Sumitomo Bakelite Co., Ltd., trade name: SUMILITE RESIN PR-51470, weight average molecular weight: 2,800: phenol novolac resin) and 34.0 parts by mass of a phenolic resin (manufactured by Sumitomo Bakelite Co., Ltd., trade name: SUMILITE RESIN PR-53529, weight average molecular weight: 30,000: resol type phenolic resin) as resins, 1.0 part by mass of calcium hydroxide as a curing agent, 1.0 part by mass of calcium stearate as mold release agent, and 1.0 part by mass of carbon black as a pigment were mixed, and thus a resin mixture b was obtained.

Next, 55 parts by mass of the glass fibers that had been subjected to a surface treatment were coated with 45 parts by mass of the resin mixture b thus obtained, by using a fluidized bed technology. The glass fibers with the resin mixture b were melted using a heater that had been heated to 400°C and fixed, and then the resin mixture as cooled.

Next, the glass fibers coated with the resin mixture b were cut so as to obtain fibers having an average length of 20 mm, using a strand cutter. Thereby, pellets b were obtained.

### <Production of fiber-containing particulate resin structure>

### (Example 1)

The pellets a thus obtained were introduced into an injection unit of an injection molding machine and were heated at 110°C to melt the resin. The fibers were opened at a screw circumferential speed of 70 mm/sec, and a molten mixture was obtained thereby. Next, the molten mixture thus obtained was discharged through discharge ports (φ 10 mm) at the nozzle tip of the injection unit of the injection molding machine, and the molten mixture was cut off from the discharge ports after the molten mixture had expanded to the range of 110% to 200% with respect to the diameter of the discharge ports. Thus, a fiber-containing particulate resin structure of Example 1 was obtained.

### (Examples 2 to 4)

The pellets a thus obtained were introduced into a single-screw extruder and were heated to melt the resin at 110°C. The fibers were opened at a screw circumferential speed of 70 mm/sec, and a molten mixture was obtained thereby. Next, the molten mixture thus obtained was discharged through discharge ports at the die tip of the single-screw extruder, and the molten mixture was cut off from the discharge ports after the molten mixture had expanded to the range of 110% to 200% with respect to the diameter of the discharge ports. Thus, a fiber-containing particulate resin structure was obtained. The discharge port diameter at the die tip of the single-screw extruder used in Example 2 was 10 mm, the discharge port diameter at the die tip of the single-screw extruder used in Example 3 was 7 mm, and the discharge port diameter at the die tip of the single-screw extruder used in Example 4 was 5 mm. The time taken to cut off the molten mixture from the discharge ports after expansion was changed, and thereby fiber-containing particulate resin structures of Examples 2 to 4 were obtained.

### (Example 5)

A fiber-containing particulate resin structure was obtained in the same manner as in Example 2, except that the pellets b were used instead of the pellets a.

### <Evaluation of pellets and fiber-containing particulate resin structures>

The following evaluations were carried out for the pellet a and the fiber-containing particulate resin structures of Examples 1 to 5 thus obtained. The evaluation results are presented in the following Table 1.

### (Average density)

The average densities of the pellet a and the fiber-containing particulate resin structures of Examples 1 to 5 thus obtained were measured by the method for measuring the density and specific gravity based on geometrical measurement as defined in "JIS Z8807".

### (Average bulk density)

The average bulk densities of the pellet a and the fiber-containing particulate resin structures of Examples 1 to 5 thus obtained were measured using a powder characteristics evaluation apparatus (manufactured by Hosokawa Micron Corporation, "POWDER TESTER Model PT-X" or the like). Specifically, a container having a volume of 100 (cm³) was used, the resin structure was caused to freely fall therein through a chute, and the weight was measured without tapping. Thus, the average bulk density was determined as a value obtained by dividing the weight by the volume of the container.

### (Average fiber length)

The average lengths of the fibers (average fiber length) included in the pellet a and the fiber-containing particulate resin structures of Examples 1 to 5 thus obtained were calculated by a procedure of the following processes (1) to (3).
(1) The entire structure was heated at 550°C using an electric furnace, the resin was vaporized, and then only the fibers were taken out.
(2) The lengths of the fibers were measured using a microscope (number of fibers measured: 500 fibers for one sample).
(3) The weight average fiber length was calculated from the fiber lengths thus measured.

### (Area fraction of fibers)

The area fractions of the fibers obtainable when cross-sections of the pellet a and the fiber-containing particulate resin structures of Examples 1 to 5 thus obtained were viewed were measured using an X-ray CT apparatus (manufactured by Yamato Scientific Co., Ltd., "TDM1000-II" or the like). Specifically, the area of the fibers was extracted from a cross-sectional image measured by X-ray CT, and the area fraction of the fibers was determined.

### (Average particle size)

The average particle sizes of the fiber-containing particulate resin structures of Examples 1 to 5 were determined by the sieve analysis test of JIS Z8815. Furthermore, the average particle size was defined as the particle size at an integrated value of 50% in a particle size distribution (medium diameter in a cumulative distribution).

### <Production of cured product>

### (Examples 1 to 5)

Each of the fiber-containing particulate resin structures thus produced was preheated to about 100°C and then was weighed. The fiber-containing particulate resin structure was introduced into a mold, pressure was applied thereto using a compression molding machine, and the resin structure was subjected to thermal curing. Thus, a cured product having a length of 100 mm × a width of 100 mm × a thickness of 4 mm was obtained. The curing conditions included a mold temperature of 170°C to 180°C, a molding pressure of 20 to 30 MPa, and a curing time of 3 minutes.

The cure products produced using the fiber-containing particulate resin structures of Examples 1 to 5 were designated as cured products of Examples 1 to 5, respectively.

### (Comparative Example 1)

The pellets a thus obtained were directly introduced into a mold, pressure was applied thereto using a compression molding machine, and the pellets were subjected to thermal curing. Thus, a cured product having a length of 100 mm × a width of 100 mm × a thickness of 4 mm was obtained. The curing conditions included a mold temperature of 170°C to 180°C, a molding pressure of 20 to 30 MPa, and a curing time of 3 minutes.

The cured product obtained as such was designated as the cured product of Comparative Example 1.

### (Comparative Example 2)

36.0 parts by mass of a phenolic resin (manufactured by Sumitomo Bakelite Co., Ltd., trade name: SUMILITE RESIN PR-51470, weight average molecular weight: 2,800: phenol novolac resin) as the resin, 6.0 parts by mass of hexamethylenetetramine and 1.0 part by mass of magnesium oxide as curing agents, 1.0 part by mass of calcium stearate as a mold release agent, 1.0 part by mass of carbon black as a pigment, and 55 parts by mass of glass chopped strands (manufactured by Nitto Boseki Co., Ltd., CS3E479, number average fiber diameter: 11 µm, and number average fiber length: 3 mm) as glass fibers were mixed, and thus a resin mixture c was obtained. Next, the resin mixture c thus obtained was kneaded with heating rolls having different speeds of rotation and was cooled into a sheet form. The sheet-like product was pulverized, and thus a granular molding material was obtained. The kneading conditions for the heating rolls were such that the speed of rotation was higher speed side/lower speed side = 20/14 rpm, the temperature was higher speed side/lower speed side = 90°C/20°C, and the kneading time was 5 to 10 minutes.

The average density, the average bulk density, and the average fiber length of the molding material obtained as such were determined by the methods described above.

Next, the granular molding material thus obtained was preheated to about 100°C and then was introduced into a mold. Pressure was applied thereto using a compression molding machine, and the molding material was subjected to thermal curing. Thus, a cured product having a length of 100 mm × a width of 100 mm × a thickness of 4 mm was obtained. The curing conditions included a mold temperature of 170°C to 180°C, a molding pressure of 20 to 30 MPa, and a curing time of 3 minutes.

A cured product obtained as such was designated as a cured product of Comparative Example 2.

### <Evaluation of cured product>

The following evaluations were carried out for the cured products of Examples 1 to 5 and Comparative Examples 1 and 2. The evaluation results are presented in the following Table 1.

### (Measurement of compressive strength)

A portion having a size of a length of 10 mm × a width of 10 mm × a thickness of 4 mm was cut away from the central portion of each of the specimens of the Test Examples, and the cut portion was used as a test specimen for measuring the compressive strength. The compressive strength of this test specimen was measured according to ISO 604.

### (Measurement of flexural strength)

A portion having a size of a length of 80 mm × a width of 10 mm × a thickness of 4 mm was cut away from the central portion of each of the specimens of the Test Examples, and the cut portion was used as a test specimen for measuring the flexural strength. The flexural strength of this test specimen was measured according to ISO 178.

### (Measurement of Charpy impact value)

A portion having a size of a length of 80 mm × a width of 10 mm × a thickness of 4 mm was cut away from the central portion of each of the specimens of the Test Examples, and the cut portion was used as a test specimen for measuring the Charpy impact value. The Charpy impact value of this test specimen was measured according to ISO 179.

### (Fractal value)

A portion having a size of a length of 5 mm × a width of 10 mm × a thickness of 4 mm was cut away from the central portion of each of the specimens of the Test Examples, and the cut portion was used as a test specimen for measuring the fractal value. The fractal value (fractal dimension (D) value) of this test specimen was specifically calculated by a procedure of the following processes (1) to (4).
(1) First, a two-dimensional image obtainable from the data measured using X-ray CT was binarized.
(2) Next, the entirety of the two-dimensional image was divided such that the X-direction and the Y-direction were respectively divided equally into n parts (n = 6, 12, 16, 25, 36, 41, or 82). Thus, the entire image was divided into n² pieces of boxes thereby.
(3) Next, for each n value, the fiber area fraction in each box was calculated, and the coefficient of variation (Cᵥ(n) = σ / a) was calculated from the average value (a) and the standard deviation (σ) of these fiber area fractions.
(4) Next, a double logarithmic graph representing the reciprocal of the n value, "1/n" on the x-axis, and the coefficient of variation "(Cᵥ(n)" on the y-axis, was plotted for the respective n values, and a value obtained by multiplying the gradient of an approximate straight line obtained therefrom by "-1" was designated as the fractal dimension (D) value.

### (Standard deviation of alignment tensor value)

A portion having a size of a length of 5 mm × a width of 10 mm × a thickness of 4 mm was cut away from the central portion of each of the specimens of the Test Examples, and the cut portion was used as a test specimen for measuring the standard deviation of the alignment tensor value. The standard deviation of the alignment tensor value of this test specimen was specifically calculated by a procedure of the following processes (1) to (4).
(1) First, a three-dimensional model was reconstituted from data measured using X-ray CT.
(2) In regard to the three-dimensional model, the fibers and the resin were binarized and separated.
(3) The fiber direction tensors (Txx, Tyy, and Tzz) were calculated.
(4) The standard deviations were calculated from the Txx, Tyy, and Tzz values obtained from data with total data number of about 2,000 in the analysis range.

**[Table 1]**

| | | Unit | Example 1 | Example 2 | Example 3 | Example 4 | Example 5 | Comparative Example 1 | Comparative Example 2 |
|---|---|---|---|---|---|---|---|---|---|
| Pellet or granular molding material | Average density | (g/cm³) | 1.28 | ← | ← | ← | | 1.28 | 1.10 |
| | Average bulk density | (g/cm³) | 0.32 | ← | ← | ← | | 0.32 | 0.85 |
| | Area fraction of fiber | (%) | 39.0 | ← | | ← | | 39.0 | - |
| | Average fiber length | (mm) | 20.0 | ← | ← | ← | | 20.0 | 0.15 |
| Particulate resin structure | Production method | | Injection molding machine | Single-screw extruder | Single-screw extruder | Single-screw extruder | Single-screw extruder | - | - |
| | Average density | (g/cm³) | 0.38 | 0.41 | 0.49 | 0.57 | 0.50 | - | - |
| | Average bulk density | (g/cm³) | 0.27 | 0.25 | 0.32 | 0.35 | 0.30 | - | - |
| | Average fiber length | (mm) | 4.6 | 4.4 | 4.1 | 3.8 | 3.9 | - | - |
| | Average particle size | (mm) | 11.6 | 11.3 | 8.0 | 6.0 | 11.6 | - | - |
| | Area fraction of fiber | (%) | 20.7 | 21.5 | 23.2 | 25.4 | 24.0 | - | - |
| Cured product | Compressive strength | (MPa) | 285 | 300 | 295 | 280 | 250 | 220 | 330 |
| | Flexural strength | (MPa) | 110 | 120 | 115 | 112 | 125 | 90 | 120 |
| | Charpy impact strength | (kJ/m²) | 35 | 30 | 32 | 28 | 26 | 45 | 4 |
| | Fractal value | (-) | 0.40 | 0.44 | 0.45 | 0.42 | 0.44 | 0.29 | 0.48 |
| | Standard deviation of alignment tensor value | (-) | 0.14 | 0.13 | 0.14 | 0.13 | 0.15 | 0.25 | - |

**[Table 2]**

| | Example 1 | Example 2 | Example 3 | Example 4 | Example 5 | Comparative Example 1 |
|---|---|---|---|---|---|---|
| Compressive strength / average fiber length | 62.0 | 68.2 | 72.0 | 73.7 | 64.1 | 11.0 |
| Flexural strength / average fiber length | 23.9 | 27.3 | 28.0 | 29.5 | 32.1 | 4.5 |
| Charpy impact strength / average fiber length | 7.6 | 6.8 | 7.8 | 7.4 | 6.7 | 2.3 |

In regard to the average fiber length in the raw material for molding the cured product, the pellet of Comparative Example 1 had a larger value than the particulate resin structures of Examples 1 to 5. That is, it was suggested that the average fiber length in the cured product was longer in Comparative Example 1 than in Examples 1 to 5.

However, when a comparison was made between Examples 1 to 5 and Comparative Example 1 for the compressive strength and flexural strength of the cured product, Examples 1 to 5 had larger values than Comparative Example 1.

Furthermore, when a comparison was made between Examples 1 to 5 and Comparative Example 1 for the ratios of the compressive strength, flexural strength, and Charpy impact strength of the cured product with respect to the average fiber length, Examples 1 to 5 had markedly larger values than Comparative Example 1.

Next, when a comparison was made between Examples 1 to 5 and Comparative Example 1 for the fractal value of the cured product, Examples 1 to 5 had larger values than Comparative Example 1. Therefore, it was confirmed that in the cured products of Examples 1 to 5, the fibers in the resin are in a satisfactory dispersed (opened) state.

Furthermore, when a comparison was made between Examples 1 to 5 and Comparative Example 1 for the standard deviation of the alignment tensor value of the cured product, Examples 1 to 5 had lower values than Comparative Example 1. Therefore, in the cured products of Examples 1 to 5, the alignment of fibers in the resin tends to be close to random alignment, and the fibers in the resin have a satisfactory dispersed state.

However, when a comparison was made between Examples 1 to 5 and Comparative Example 1 with regard to the raw material used for molding a cured product, Examples 1 to 5 each employed a particulate resin structure including a resin; and fibers dispersed in the resin in an opened state, with at least one of the average density and the average bulk density having its value in a required range, whereas Comparative Example 1 employed an unopened pellet.

Therefore, it was confirmed that when cured products are molded using the particulate resin structures of Examples 1 to 5, cured fiber-reinforced resin products having enhanced mechanical strength such as compressive strength and flexural strength are obtained.

Furthermore, regarding the cured products obtained using the particulate resin structures of Examples 1 to 5, it was confirmed that since the fractal value representing the dispersed state of the fibers in the resin, and the standard deviation of the alignment tensor value representing the alignment state of the fibers in the resin, had their values in required ranges, the cured products had sufficiently enhanced mechanical strength and stable product quality.

It was also confirmed that the cured products of Examples 1 to 5 obtained by using the fiber-containing particulate resin structures of the present invention, in which long glass fibers were included in an opened state, had markedly improved dynamic strength such as Charpy impact strength while maintaining the static strength such as compressive strength or flexural strength at an equal level, compared to the cured product of Comparative Example 2 obtained by using a conventional granular molding material that is obtainable by heating and kneading a resin mixture including short glass fibers.

### INDUSTRIAL APPLICABILITY

When a cured product or a molded article is produced using the fiber-containing particulate resin structure of the present invention, a cured fiber-reinforced resin product or a fiber-reinforced resin molded article having enhanced mechanical strength and stable product quality can be produced.

### DESCRIPTION OF REFERENCE NUMERALS

- 1: Resin
- 2: Fiber
- 10: Injection unit of injection molding machine
- 11: Cylinder
- 12: Nozzle
- 12a: Discharge port
- 13: Screw
- 14: Input port
- 15: Heater
- 20: Single-screw extruder
- 21: Barrel
- 22: Die
- 22a: Discharge port
- 23: Screw
- 24: Input port
- S: Resin structure (fiber-containing particulate resin structure)
- P: Pellet

## Claims

1. A method for producing a fiber-containing particulate resin structure (S), comprising:
a preparation step of solidifying bundles of fibers (2) having an average length of from 3 mm to 50 mm with a resin to obtain pellets (P), wherein the average fiber length is determined by a method according to the description;
a first step of melting the pellets (P) to obtain a molten mixture of a resin composition in which the fibers (2) are dispersed in an opened state in the resin (1) that is molten; and
a second step of extruding the molten mixture through a discharge port (12a, 22a), and cutting off the resin composition from the discharge port (12a, 22a) after a diameter of the resin composition that has been extruded through the discharge port (12a, 22a) has expanded to a value of 110% to 220% with respect to a diameter of the discharge port (12a, 22a), wherein
the resin (1) is a phenol novolac resin, a resol resin, or a combination thereof,
the phenol novolac resin has a weight average molecular weight of 1,000 to 8,000,
the resol resin has a weight average molecular weight of 1,000 to 100,000,
wherein the weight average molecular weight is measured by gel permeation chromatography (GPC) defined as the weight molecular weight calculated relative to polystyrene standards, and
the fibers (2) are glass fibers subjected to a surface treatment with a silane-based coupling agent.

2. The method for producing a fiber-containing particulate resin structure (S) according to claim 1, **characterized in that** the diameter of the discharge port (12a, 22a) is in a range of 3 to 20 mm.

3. The method for producing a fiber-containing particulate resin structure (S) according to claim 1 or 2, **characterized in that** the first step is carried out using an injection unit (10) of an injection molding machine.

4. The method for producing a fiber-containing particulate resin structure (S) according to claim 1 or 2, **characterized in that** the first step is carried out using an extruder (20).

5. The method for producing a fiber-containing particulate resin structure (S) according to claim 4, **characterized in that** the first step is carried out using a single-screw extruder (20).

6. The method for producing a fiber-containing particulate resin structure (S) according to claim 4 or 5, **characterized in that** the extruder (20) has one or more discharge ports (22a).

7. The method for producing a fiber-containing particulate resin structure (S) according to any one of claims 1 to 6, **characterized in that** in the second step, the particulate resin structure is obtained by cutting off the resin structure immediately after being extruded through the discharge port (12a, 22a).

## Patentansprüche

1. Verfahren zur Herstellung einer faserhaltigen teilchenförmigen Harzstruktur (S), umfassend:
einen Vorbereitungsschritt des Verfestigens von Faserbündeln (2) mit einer durchschnittlichen Länge von 3 mm bis 50 mm mit einem Harz, um Pellets (P) zu erhalten, wobei die durchschnittliche Faserlänge durch ein Verfahren gemäß der Beschreibung bestimmt wird;
einen ersten Schritt des Schmelzens der Pellets (P), um eine geschmolzene Mischung einer Harzzusammensetzung zu erhalten, in der die Fasern (2) in einem geöffneten Zustand in dem geschmolzenen Harz (1) dispergiert sind; und
einen zweiten Schritt des Extrudierens der geschmolzenen Mischung durch eine Auslassöffnung (12a, 22a) und des Abschneidens der Harzzusammensetzung von der Auslassöffnung (12a, 22a), nachdem sich ein Durchmesser der Harzzusammensetzung, die durch die Auslassöffnung (12a, 22a) extrudiert wurde, auf einen Wert von 110% bis 220% in Bezug auf einen Durchmesser der Auslassöffnung (12a, 22a) ausgedehnt hat,
wobei das Harz (1) ein Phenol-Novolak-Harz, ein Resol-Harz oder eine Kombination davon ist,
wobei das Phenol-Novolak-Harz ein Gewichtsmittel des Molekulargewichts von 1.000 bis 8.000 aufweist,
wobei das Resol-Harz ein Gewichtsmittel des Molekulargewichts von 1.000 bis 100.000 aufweist,
wobei das Gewichtsmittel des Molekulargewichts durch Gelpermeationschromatographie (GPC) gemessen wird und als das relativ zu Polystyrolstandards berechnete Gewichtsmolekulargewicht definiert ist, und
die Fasern (2) Glasfasern sind, die einer Oberflächenbehandlung mit einem Silankopplungsmittel unterzogen wurden.

2. Verfahren zur Herstellung einer faserhaltigen teilchenförmigen Harzstruktur (S) nach Anspruch 1, **dadurch gekennzeichnet, dass** der Durchmesser der Auslassöffnung (12a, 22a) in einem Bereich von 3 bis 20 mm liegt.

3. Verfahren zur Herstellung einer faserhaltigen teilchenförmigen Harzstruktur (S) nach Anspruch 1 oder 2, **dadurch gekennzeichnet, dass** der erste Schritt unter Verwendung einer Spritzeinheit (10) einer Spritzgussmaschine durchgeführt wird.

4. Verfahren zur Herstellung einer faserhaltigen teilchenförmigen Harzstruktur (S) nach Anspruch 1 oder 2, **dadurch gekennzeichnet, dass** der erste Schritt unter Verwendung eines Extruders (20) durchgeführt wird.

5. Verfahren zur Herstellung einer faserhaltigen teilchenförmigen Harzstruktur (S) nach Anspruch 4, **dadurch gekennzeichnet, dass** der erste Schritt unter Verwendung eines Einschneckenextruders (20) durchgeführt wird.

6. Verfahren zur Herstellung einer faserhaltigen teilchenförmigen Harzstruktur (S) nach Anspruch 4 oder 5, **dadurch gekennzeichnet, dass** der Extruder (20) eine oder mehrere Auslassöffnung(en) (22a) aufweist.

7. Verfahren zur Herstellung einer faserhaltigen teilchenförmigen Harzstruktur (S) nach einem der Ansprüche 1 bis 6, **dadurch gekennzeichnet, dass** im zweiten Schritt die teilchenförmige Harzstruktur durch Abschneiden der Harzstruktur unmittelbar nach dem Extrudieren durch die Auslassöffnung (12a, 22a) erhalten wird.

## Revendications

1. Procédé pour produire une structure de résine particulaire contenant des fibres (S), comportant :
une étape de préparation consistant à solidifier des groupes de fibres (2) ayant une longueur moyenne de 3 mm à 50 mm avec une résine pour obtenir des granulés (P), dans lequel la longueur de fibre moyenne est déterminée par un procédé conforme à la description ;
une première étape consistant à faire fondre les granulés (P) pour obtenir un mélange fondu d'une composition de résine dans laquelle les fibres (2) sont dispersées dans un état ouvert dans la résine (1) qui est fondue ; et
une seconde étape consistant à extruder le mélange fondu à travers un orifice de refoulement (12a, 22a), et couper la composition de résine provenant de l'orifice de refoulement (12a, 22a) après qu'un diamètre de la composition de résine qui a été extrudée à travers l'orifice de refoulement (12a, 22a) a augmenté jusqu'à une valeur de 110 % à 220 % par rapport à un diamètre de l'orifice de refoulement (12a, 22a), dans lequel
la résine (1) est une résine novolaque phénolique, une résine résol ou une combinaison de celles-ci,
la résine novolaque phénolique a une masse moléculaire moyenne en masse de 1 000 à 8 000,
la résine résol a une masse moléculaire moyenne en masse de 1 000 à 100 000,
dans lequel la masse moléculaire moyenne en masse est mesurée par chromatographie par perméation sur gel (GPC) définie comme la masse moléculaire en masse calculée par rapport aux polystyrènes standards, et
les fibres (2) sont des fibres de verre soumises à un traitement de surface avec un agent de couplage à base de silane.

2. Procédé pour produire une structure de résine particulaire contenant des fibres (S) selon la revendication 1, **caractérisé en ce que** le diamètre de l'orifice de refoulement (12a, 22a) est dans une plage de 3 à 20 mm.

3. Procédé pour produire une structure de résine particulaire contenant des fibres (S) selon la revendication 1 ou 2, **caractérisé en ce que** la première étape est exécutée en utilisant une unité d'injection (10) d'une machine à mouler par injection.

4. Procédé pour produire une structure de résine particulaire contenant des fibres (S) selon la revendication 1 ou 2, **caractérisé en ce que** la première étape est exécutée en utilisant une extrudeuse (20).

5. Procédé pour produire une structure de résine particulaire contenant des fibres (S) selon la revendication 4, **caractérisé en ce que** la première étape est exécutée en utilisant une extrudeuse monovis (20).

6. Procédé pour produire une structure de résine particulaire contenant des fibres (S) selon la revendication 4 ou 5, **caractérisé en ce que** l'extrudeuse (20) a un ou plusieurs orifices de refoulement (22a).

7. Procédé pour produire une structure de résine particulaire contenant des fibres (S) selon l'une quelconque des revendications 1 à 6, **caractérisé en ce qu'**à la seconde étape, la structure de résine particulaire est obtenue en coupant la structure de résine immédiatement après avoir été extrudée à travers l'orifice de refoulement (12a, 22a).
